# EUROPEAN PATENT APPLICATION

(11) **EP 3 789 251 A1**
(43) Date of publication of application: **10.03.2021**
(21) Application number: 19195057.5
(22) Date of filing: 03.09.2019
(51) Int. Cl.: B60S 1/34

(54) **WIPER ARRANGEMENT**

(71) Applicant: Arrival Limited, London W14 8TS (GB)
(72) Inventor: BULLOCK, Joff, London, W14 8TS (GB)
(74) Representative: Korenberg, Alexander Tal

(57) **Abstract**

A wiper system comprising a curved windscreen (102), a drive unit (202) and a wiper arm (302) connected to the drive unit by a spindle (204) and having a wiper attachment (304) for attaching a wiper blade (306) to the wiper arm, wherein the drive unit is configured to reciprocate the wiper arm on a trajectory between two extreme positions by rotation of the spindle about a main axis. The main axis is disposed substantially normal to a sweep plane containing a reference point on the wiper arm when the wiper arm is in three respective positions (108, 110, 112) on the trajectory.

## Description

The present disclosure relates to a wiper system and method of making a design for a wiper system.

There is a current trend towards curved windscreens to provide a modern look while also providing practical advantages such as improved aerodynamics and improved driver visibility. However, adapting windscreen wipers to effectively clear water and dirt from curved windscreens has been found to be technically challenging.

Solutions for wipers for curved windscreens, such as twisting drive shafts and geared heads, have been suggested to maintain the attack angle needed to legally and effectively clear a curved windscreen. US 5384932, WO 2026 029870 and US 4546518 describe ways of achieving an improved angle of attack. However, all of these solutions require additional parts and mechanisms which increase cost, weight and complexity, which increases cost. Given that two of the biggest obstacles facing the electrification of transport are vehicle cost and range, these problems are only made worse by such costly designs.

Aspects are set out in the independent claims and optional features are set out in the claims dependent thereto.

The disclosed wiper system represents a change in the fundamental design of windscreen wiper systems for curved windscreens, resulting from a ground-up design approach that diverges from current solutions to this problem. The result is a simple low-cost wiper system with fewer components that is easy to assemble and effectively facilitates maintaining an angle of attack of a wiper blade across the sweep while helping to control contact forces between the wiper and the windscreen, as explained in detail below.

In some embodiments, the wiper system, which may be used in a vehicle, for example an electric vehicle, comprises a curved windscreen, a drive unit and a wiper arm connected to the drive unit by a spindle and having a wiper attachment for attaching a wiper blade to the wiper arm. The drive unit is configured to reciprocate the wiper arm on a trajectory between two extreme positions and through an intermediate position that is, for example, halfway between the extreme positions, by rotation of the spindle about a main axis. The main axis is disposed substantially normal to a sweep plane containing a reference point on the wiper arm when the wiper arm is in three respective positions on the trajectory.

Advantageously, as will be explained in detailed below, by disposing the main axis in this way, the consistency across the windscreen of the angle of attack and of contact forces between the wiper and windscreen is improved. It will be understood that the main axis is substantially normal in the sense that the discussed consistency of angle of attack and of the forces between the wiper and the windscreen is achieved at least to some extent to provide an improvement over conventional arrangements. In conventional arrangements the wiper spindle tends to be normal to a plane representing the overall orientation of the windscreen. When such arrangements are applied to curved windscreens, the wiper will tend to come away from the windscreen as it reciprocates. Further, the wiper will tend to move in the plane representing the overall orientation, so that the angle of attack is not consistent across the curvature of the windscreen. As discussed above, prior to this disclosure, there is no simple way to resolve these issues without adding parts, complexity and, hence, costs.

The reference point may correspond to the wiper attachment, for example be located on, at, adjacent or near the wiper attachment, and/or the three respective positions on the trajectory may be the two extreme positions and intermediate position in between the extreme positions, for example half-way in between. The main axis may lie in a bisecting plane that bisects the curved windscreen, and/or the intermediate position may lie in the bisecting plane. The main axis may be disposed with an angle in the range of 60 to 90 degrees away from the sweep plane, preferably 70 to 90 degrees and more preferably 80 or even 85 to 90 degrees, while still providing the benefits discussed above.

In conventional wiper systems, a spring is needed to apply constant pressure during the wiper sweep, which fatigues over time and adds cost and weight. Spring arms, where a wiper arm is made of a resiliently flexible material that biases the wiper against the windscreen without the need for an additional spring, are known, for example from EP 2934957. However, such a design has yet to be successfully implemented on curved windscreens due to the problem of having to maintain a consistent pressure throughout the sweep. This become more and more problematic as the curvature of the windscreen increases, in light of the variation of contact forces described above.

The disclosed wiper arm may be a resilient arm (a spring arm) made from resiliently flexible material configured to provide a spring force for biasing the wiper attachment towards the curved windscreen, and all of the force biasing the wiper attachment towards the curved windscreen may be provided by the spring force provided by the arm.

An additional advantage of the disclosed wiper system is particularly relevant when a spring arm is used. Due to the unique arrangement of the wiper system, the wiper tracks the curvature of the windscreen throughout the wiper sweep, which facilitates maintaining a consistent pressure throughout the sweep. Thus, the disclosed system facilitates the use of a spring arm, which results in further cost saving and improved aesthetics when compared with exiting wipers for curved windscreens.

The wiper arm may be part of a pantographic wiper system, in a spring arm configuration or otherwise. In this case, the wiper arm has a spindle bracket for attaching the wiper arm to the spindle of the drive unit for reciprocating the wiper arm about the main axis. The wiper attachment is spaced along the wiper arm from the spindle bracket, wherein the wiper attachment is secured to the wiper arm to rotate about a wiper axis. The pantographic wiper system comprises an auxiliary arm rotatably connected at one end to the wiper attachment to rotate relative to the wiper attachment about a first auxiliary axis off-set from the wiper axis. It further comprises a parallel link for coupling the auxiliary arm at its other end to the drive unit to rotate relative to the parallel link about a second auxiliary axis having a fixed offset from the main axis, thereby rotating the wiper attachment about the wiper axis in a pantographic motion as the wiper arm rotates about the main axis. It will be understood that the parallel link serves the function of implementing pantographic, or substantially pantographic motion of the wiper system and will be understood in this way, without implying a strict geometrical limitation. The auxiliary arm is disposed along the wiper arm in an at least partially overlapping relationship.

The wiper arm may be wider than the auxiliary arm or the auxiliary arm is wider than the wiper arm and may fully overlap the auxiliary arm along the majority of its length. The majority of its length may be 70%, preferably 80% and more preferably 90% of its length.

Also disclosed is method of making a design for a wiper system such as the wiper system described above. The method comprises defining a sweep area, wherein the drive unit is arranged to reciprocate the wiper arm between two extreme positions to sweep the sweep area with the wiper blade. Further, a reference point on the wiper arm is defined and a sweep plane containing the reference point when the wiper arm is in three different positions of the sweep is defined, for example the reference point may correspond to or be on the wiper attachment and/or the three respective positions on the trajectory may be the two extreme positions and an intermediate position in between, for example halfway in between. A main axis of rotation of the spindle is then oriented based on a normal or perpendicular direction to the sweep plane, and the wiper arm is disposed in relation to the spindle to sweep the sweep area with the wiper blade.

The main axis may be oriented to lie substantially normal to the sweep plane, for example along a direction with an angle in the range of 60 to 90 degrees away from the sweep plane, preferably 70 to 90 degrees and more preferably 80 to 90 degrees. The main axis may lie in a bisecting plane bisecting the curved windscreen and/or the intermediate position may lie in the bisecting plane.

Also disclosed is a method of making a wiper system comprising: providing a curved windscreen; providing a drive unit; and providing a wiper arm connected to the drive unit by a spindle, the wiper arm having a wiper attachment for attaching a wiper blade to the wiper arm. The drive unit is then arranged relative to the curved windscreen in accordance with a design for a wiper system made in accordance with the method above.

Embodiments will now be described by way of example with reference to the drawings of which:
Figure 1 illustrates a curved windscreen of the presently disclosed wiper system;
Figures 2 and 3 illustrates front-on and side views of the curved windscreen of Figure 1;
Figure 4 illustrates the curved windscreen of Figures 1-3 coupled to a drive unit;
Figure 5 illustrates the attack angle of a wiper blade;
Figure 6 illustrates the variation of attack angle with sweep angle for the presently disclosed wiper system compared with a standard wiper system with a curved windscreen;
Figure 7 is a flow chart for a method of making a design for a wiper system;
Figure 8 is an exploded view of a pantographic wiper arm assembly;
Figure 9 illustrates a wiper blade;
Figures 10A, 10B and 10C illustrate a pantographic wiper arm assembly attached to a drive unit; and
Figure 11 is an exploded view of a drive unit.

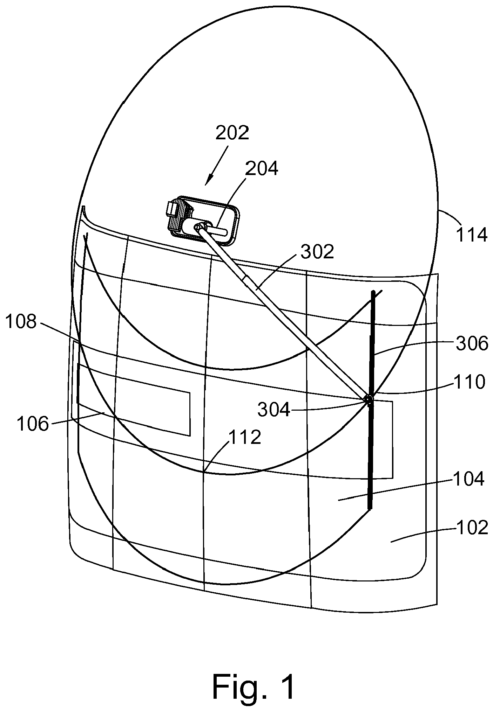

With reference to Figure 1, a wiper system in accordance with an embodiment comprises a curved windscreen 102, a drive unit 202 and a wiper arm 302 connected to the drive unit 202 by a spindle 204. The system may be installed in a vehicle (not shown), for example a van, truck or bus. Further applications of the system are discussed below. The wiper arm 302 has a wiper attachment 304 for attaching a wiper blade 306 to the wiper arm 302. The wiper attachment 304 can be integral with the wiper arm 302. The wiper arm 302 is disposed so that a resilient biasing force is exerted by the wiper arm 302 onto the wiper blade 306 and hence the wiper arm 302 biases the wiper blade 306 into contact with the windscreen 102. A sweep area 104 is the area swept by the wiper blade 306 as it passes across the curved windscreen 102 as the wiper arm 302 reciprocates between two extreme positions 108/110. The curved windscreen 102 comprises a vision zone 106, which may coincide with the sweep area 104. By way of example, in Figure 1 the wiper arm 302 is part of a pantographic wiper system (described in detail below) and so the left and right sides of the sweep area 104 are substantially parallel. In other embodiments, different wiper arrangements may be used.

The drive unit 202 is configured to reciprocate the wiper arm 302 between the two extreme positions 108/110 and through an intermediate position 112 halfway between the extreme positions 108/110 by rotation of the spindle 204 about its axis, which will also be referred to as the main axis of the pantographic wiper system described in more detail below. As shown in Figure 1, the two extreme positions 108/110 lie on the curved windscreen 102 and correspond to the position of the wiper attachment 304 (or midpoint of the wiper blade 306, when attached) at the left and right sides of the sweep area 104. The wiper attachment 304 also passes through an intermediate position 112 that lies on the curved windscreen 102 halfway between these extreme positions 108/110.

The axis of the spindle and/or the intermediate position 112 lie in a bisecting plane that bisects the curved windscreen 102. In simple terms, owing to the curvature of the curved windscreen 102, it can be seen that the extreme positions 108/110 lie behind the intermediate position 112, which is at the front of the curved windscreen 102.

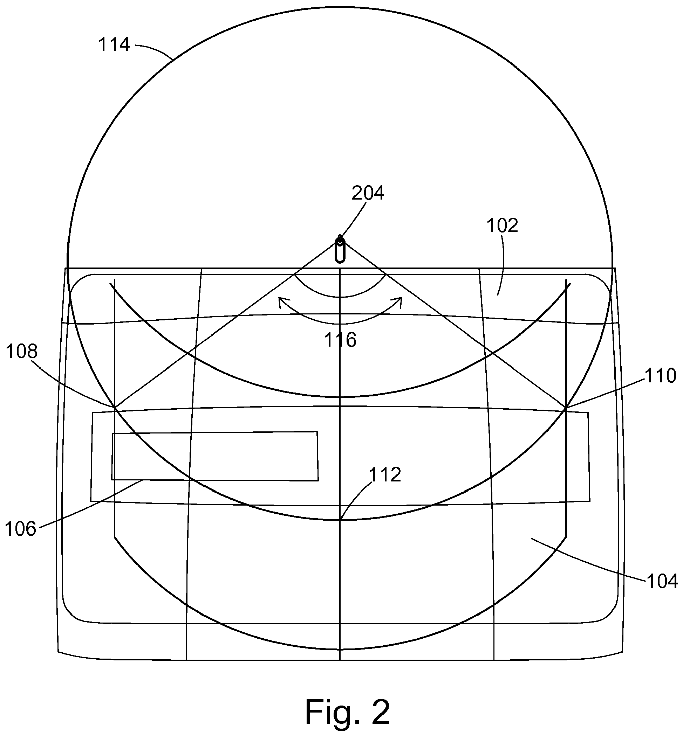

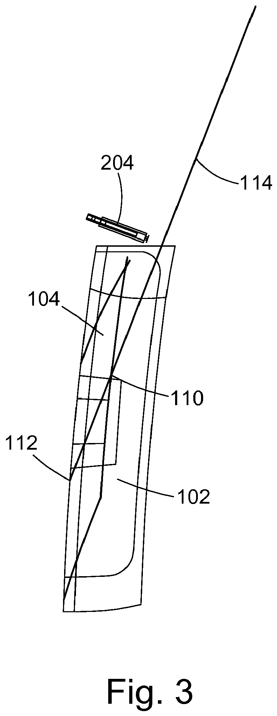

Figures 2 and 3 show front-on and side views of the curved windscreen 102 of Figure 1, with some of the elements omitted in the interest of clarity. The sweep angle 116 of the wiper arm 302 (explained below) is also illustrated.

As the wiper attachment 304 reciprocates about the spindle 204, it does so along a portion of a wiper attachment path 114. This is illustrated as a full circular path corresponding to a cone traced by the wiper arm 302 with an apex coinciding with the axis of the spindle 204. However, it will be understood that only a part of this circular path is traced between the extreme positions 108/110, passing through the intermediate position 112 as the wiper arm 302 reciprocates and, in the same way, the wiper arm 302 only traces part of a cone. The wiper attachment path 114 is determined by the angle of the spindle 204, the length of the wiper arm 302 and the surface of the curved windscreen 102.

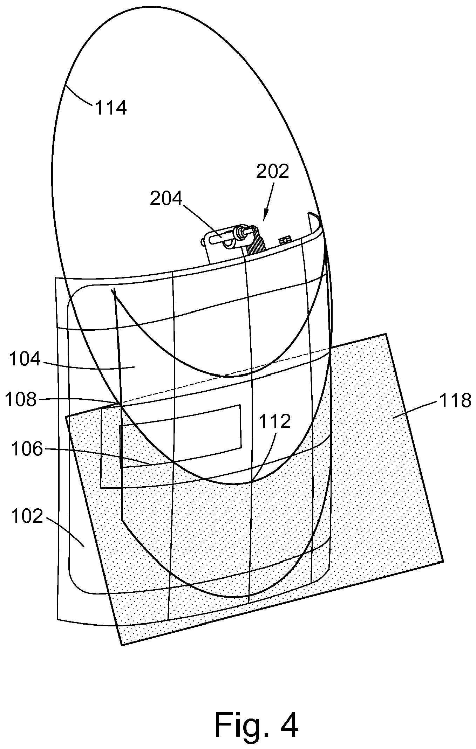

With reference to Figure 4, it can be noted that the circular trajectory of the wiper attachment path 114 coincides with a sweep plane 118 that can be defined, for example, by the location of a reference point on the wiper attachment 304 (or another reference point) when the wiper arm 302 is in the two extreme positions 108/110 and intermediate position 112, or any other three points on the trajectory. To result in the described trajectories for the wiper arm 302 and the wiper attachment 304, the axis of the spindle 204 is normal to this sweep plane 118.

By aligning the circular trajectory of the wiper attachment path 114 (and hence the cone swept by the wiper arm 302) with the curvature of the windscreen 102 in the way described, one or both of the following effects can be achieved:
- Firstly, since the circular trajectory of the wiper attachment 304 is associated with a conical sweep of the wiper arm 302, the distance of a notional rest position of the resiliently biased wiper attachment 304 to the windscreen 102 is substantially constant, or in other words, the resilient biasing force urging the wiper blade 306 into contact with the windscreen 102 is substantially constant as the wiper arm 302 reciprocates.
- Secondly, since the wiper arm 302 sweeps a conical trajectory and the wiper attachment 304 a circular trajectory, the wiper arm 302 and wiper attachment 304 remain substantially tangential to the windscreen 102 surface and therefore maintain a consistent attack angle 330 close to 0 degrees from perpendicular to the windscreen 102 (determined as defined below) for each sweep, as the unbiased orientation of the wiper blade 306 follows the curvature of the windscreen 102 together with the wiper attachment 304.

Both the above features interact to provide an improved and more efficient sweep of the windscreen 102 as the consistent pressure on and orientation with respect to the surface of the windscreen 102 allows sweeping to be optimised across the extent of the sweep area 104. It can be seen that by arranging the geometry of the swept path of the wiper attachment 304 and the corresponding orientation of the axis of the spindle 204 with the curvature of the windscreen 102 in mind, improved sweeping efficiency can be achieved without the need for any additional moving parts or complex mechanisms.

It will be appreciated that the above discussion is made in idealised terms. For example, it assumes a cylindrically curved windscreen 102 surface and ignores that for any sweep plane 118 not normal to the axis of the cylindrical curvature, the actual line traced on the windscreen 102 will be somewhat elliptical to an extent dictated by the departure from the normal orientation of the sweep plane 118. However, even under non-ideal, real world conditions, for the actual elliptical trace and/or non-ideally cylindrical curvatures (for example having an angularly dependent radius of curvature or a conical component), design in terms of orientation of the axis of the spindle 204 substantially normal to the sweep plane 118 results in improved sweep pressure consistency and improved attack angle 330 across the sweep.

It will be understood that these benefits accrue even when the orientation of the spindle axis is not strictly normal to the sweep plane 118, but rather deviates from the ideal, as the pressure and attack angle 330 distribution is improved relative to a conventional orientation of the spindle 204 (more or less horizontal for a vertical arrangement of the windscreen 102). For example, substantial benefits may be achieved for substantially normal orientation of the spindle 204 relative to the sweep plane 118, say in the range of 60 to 90 degrees away from the sweep plane 118.

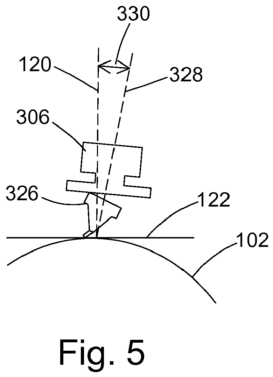

Figure 5 illustrates the attack angle 330 of a wiper blade 306. The wiper blade 306 comprises a blade tip 326 which is pulled sideways relative to wiper blade 306 as it is drawn across the curved windscreen 102. However, it is the body angle 328 of the wiper blade 306 in its unbiased position relative to the line 120 perpendicular to the tangent 122 to the curved windscreen 102 below the wiper blade 306 that defines the attack angle 330 (rather than the angle of the blade tip 326). With conventional arrangement of the wiper arm 302, if the attack angle 330 is 0 degrees in the centre of the windscreen 102, it will substantially deviate from this orientation due to the windscreen 102 curvature. By arranging the orientation of the spindle 204 normal to the sweep plane 118, the wiper attachment 304 and hence the attack angle 330 tracks (to some extent, at least), the windscreen 102 curvature as described above.

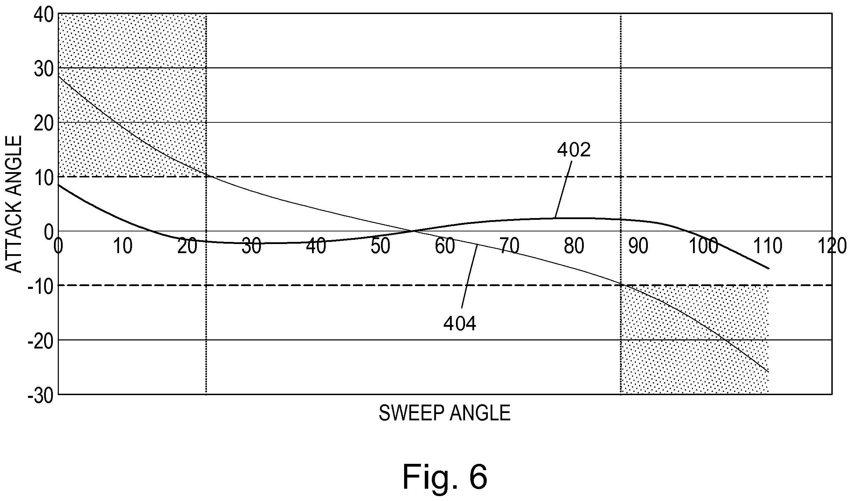

Figure 6 illustrates the variation of attack angle 330 with sweep angle 116 of a wiper arm 302 for the presently disclosed wiper system (line 402) compared with a standard wiper system with a curved windscreen (line 404). Sweep angle 116 (illustrated in Figure 2) is the angle of the wiper arm 302 relative to one of the two extreme positions of the sweep. Thus, with reference to Figure 6, angles of 0 and 110 degrees correspond to the extreme positions of the sweep and an angle of 55 degrees corresponds to the midpoint of the sweep i.e. when the wiper arm 302 is perpendicular to the ground, the sweep angle 116 has a value of 55 degrees. As can been seen from Figure 6, a much better attack angle 330 (closer to 0 degrees) is maintained across the sweep.

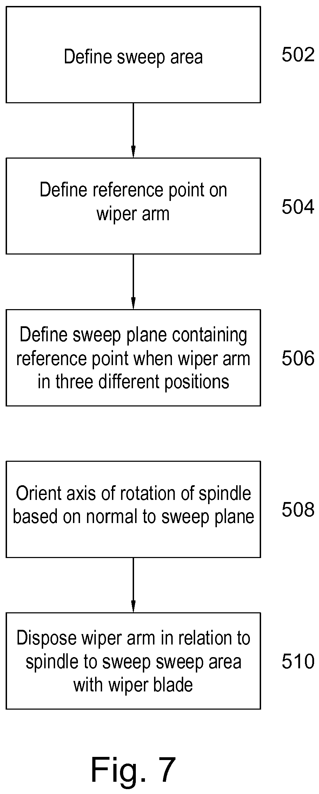

Figure 7 is a flow chart for making a design for a wiper system. With reference to Figure 7, to make a design for a wiper system in accordance with the principles set out above, a sweep area 104 is defined 502 on a given windscreen 102 and for a given location of the drive unit 202 relative to the windscreen 102, for example with the spindle axis of rotation coinciding with a plane bisecting the windscreen 102.

A reference point on the wiper arm is defined 504. Based on the spindle 204 position and configuration of the wiper arm 302, three points on a trajectory of the reference point on the wiper arm 302 are found and a sweep plane 118 is defined 506 using the three points. The reference point may be chosen to be on the wiper attachment 304 and/or the points on the trajectory may be chosen as the extreme positions 108/110 when the wiper arm 302 is at each end of the sweep area 104 and a point in between, for example half-way in between. Either measure will tend to sample a large extent of the windscreen 102 and may hence help to "average" out deviations in windscreen 102 shape from the ideal, the effect of the inclination of the sweep plane 118, and so forth. Once the sweep plane 118 is defined, the orientation of the axis of rotation of the spindle 204 can be set 508 for the design. Once the orientation of the spindle 204 is known, the wiper arm 302 can be disposed 510 relative to the spindle 204 by an appropriate fixing that ensures an orientation of the wiper arm 302 relative to the spindle 204 to provide a desired contact force due to a resilient biasing means of the wiper arm 302, for example a hinge and spring arrangement or the inherent resilient flexibility of the wiper arm 302 as discussed in more detail below.

It will be appreciated that a wiper system, and a vehicle including such a wiper system, can be manufactured using a design as described above, by arranging and disposing the various components in accordance with the design. Further, it will be appreciated that, as discussed above, certain tolerances and departures from a notional circular wiper attachment path 114, for example due to the orientation of the sweep plane 118 or the shape of the windscreen 102 are possible but do not detract from obtaining substantial benefits as described from a design that orients the spindle 204 as detailed above. It is also envisaged that orienting the spindle 204 displaces the point about which the wiper arm 302 reciprocates, introducing subtle changes in the wiper trajectory after orienting the spindle 204 as compared to before. If this is undesirable, the design procedure can be repeated by iteratively tracing trajectories and orienting the spindle 204 until a desired result is achieved.

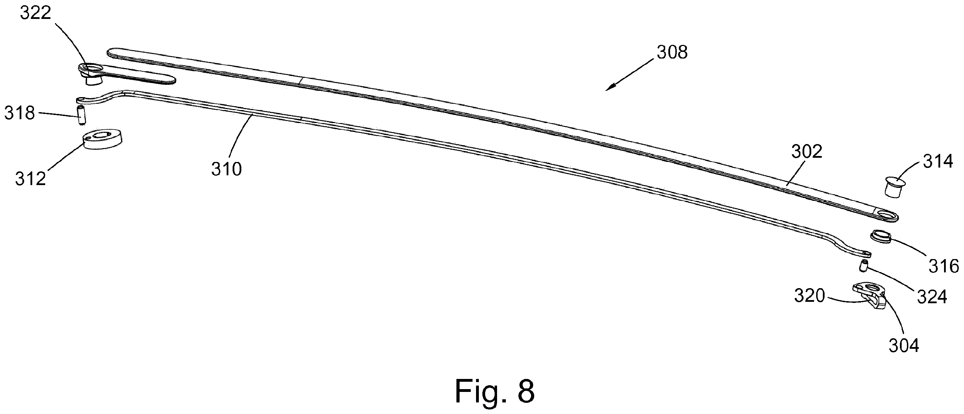

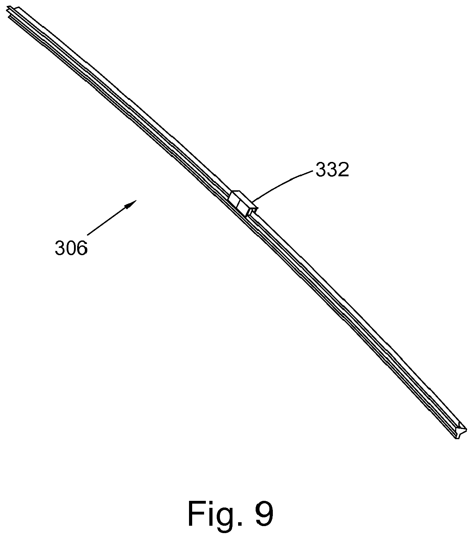

Turning now to a detailed description of an embodiment of a pantographic wiper system with improved aesthetics and reduced number of parts, with reference to Figures 8 and 9 a pantographic wiper arm assembly 308 comprises the wiper arm 302, an auxiliary arm 310, a parallel link 312, a rivet 314, a bushing 316, a first rivet with bushing 318, a spindle bracket 322, a second rivet with bushing 324 and a wiper attachment 304 comprising a free end 320 for attaching a wiper blade 306. For the avoidance of doubt, although reference is made to a parallel link 312, no strict compliance with a parallelogram configuration (or strict pantographic motion) is required and in some embodiments, there may be noticeable tolerances.

The wiper arm 302 connects to the spindle bracket 322 which attaches the wiper arm 302 to the spindle 204 of the drive unit 202 for reciprocating the wiper arm 302 about the axis of rotation of the spindle 204, referred to below as the main axis. Specifically, in some embodiments, the spindle bracket 322 can be attached to the spindle 204 by sliding the spindle bracket 322 onto a sleeve 218 around the spindle 204 until the spindle bracket 322 engages an internal detent inside the sleeve 218. The wiper attachment 304 is spaced along the wiper arm 302 from the spindle bracket 322 for attaching a wiper blade 306 to the wiper arm 302 via the free end 320. The wiper attachment 304 is secured to the wiper arm 302 via the rivet 314 and bushing 316 to rotate about a wiper axis through the rivet 314. The auxiliary arm 310 is rotatably connected at one end to the wiper attachment 304 via the second rivet with bushing 324 to rotate relative to the wiper attachment 304 about a first auxiliary axis off-set from the wiper axis.

The parallel link 312 couples the auxiliary arm 310 at its other end to the drive unit 202 and is disposed in a fixed relationship to the drive unit 202. For example, the parallel link 312 may attach to the spindle bracket 322 for attachment to the sleeve 218 around the spindle 204. The auxiliary arm 310 is connected to the parallel link 312 via the first rivet with bushing 318 to rotate relative to the parallel link 312 about a second auxiliary axis through the first rivet with bushing 318 and hence having a fixed offset from the main axis. As a result, the auxiliary arm 310 causes the wiper attachment 304 to rotate about the wiper axis in a pantographic motion as the wiper arm 302 rotates about the main axis.

The auxiliary arm 310 is disposed along the wiper arm 302 in an at least partially overlapping relationship, in order to at least partially hide the auxiliary arm 310 behind the wiper arm 302. The wiper arm 302 may be wider than the auxiliary arm 310 to facilitate this. Alternatively, the auxiliary arm 310 may be wider than the wiper arm 302, such that the auxiliary arm 310 may be at least partially hidden behind the wiper arm 302. The wiper arm 302 may fully overlap the auxiliary arm 310 along the majority of its length, the majority of its length being 70%, preferably 80% and more preferably 90% of its length. The wiper arm 302 may have a width and/or be shaped to hide the parallel link 312 and/or auxiliary arm 310 behind it over the range of motion of the wiper arm 302.

The auxiliary arm 310 may be attached to the parallel link 312 such that the second slave axis can tilt relative to the main axis as the wiper arm 302 reciprocates. For example, the auxiliary arm 310 can be attached to the parallel link 312 via a ball and socket attachment. Alternatively or additionally, the auxiliary arm 310 can bend or flex as the wiper arm 302 bends or flexes towards the windscreen 102 as it reciprocates. In some embodiments, a ball and socket attachment may be replaced by any other suitable attachment, for example a rivet with or without a bushing as described above. In some embodiments, the attachment of the auxiliary arm 310 to the parallel link 312 (or the wiper attachment 304) may have some play to accommodate any relative motion of the auxiliary arm and 310 and the wiper arm 302.

As can be seen from Figure 8, in some embodiments, the ends of the auxiliary arm 310 are dogleg shaped or curved. This allows the main length of the auxiliary arm 310 to be positioned behind the wiper arm 302, while allowing the auxiliary arm 310 to connect to the parallel link 312 and wiper attachment 304 at a desired lateral offset. Further, the curved or dogleg shape allows the auxiliary arm 310 to connect at the sides of parallel link 312 and wiper attachment 304 while maintaining overlap with the wiper arm, meaning the distance between adjacent axes of rotations can be increased while still hiding the majority of the auxiliary arm 310 behind the wiper arm 302. In other words, when the ends of the auxiliary arm have an end section extending laterally away from a main section of the auxiliary arm, for example in a curved manner, they defining a line of force transmission from one end to the other that is laterally off-set from the auxiliary arm. This facilitates the hiding of the auxiliary arm behind the main arm with a greater off set from the line of action of the main arm than would otherwise be possible, and thus improves the wiper arm aesthetics with larger lever arms about the axes than would otherwise be possible. This thus enables the lever moments of the pantographic arrangement to be reduced while maintaining the aesthetics of the arrangement.

In some embodiments, the wiper arm 302 is made of a resiliently flexible material and acts as a spring arm (also known as a resilient arm) to bias the wiper against the windscreen 102. When assembled as part of a wiper system comprising a curved windscreen 102, the spring arm is thus configured to provide a spring force for biasing the wiper arm 302 (and therefore a wiper attachment 304 and wiper blade 306) towards the curved windscreen 102. Suitable resiliently flexible materials include steel (such as stainless steel or spring steel), fibre reinforced plastics, thermoplastics and carbon fibre. Advantageously, by using the inherent resilience of the wiper arm to bias the wiper blade 306 against the windscreen 102, additional moving parts, such as a hinge and spring arrangement, can be avoided or at least their specification can be reduced.

Implementing a wiper system comprising a spring arm on a curved windscreen 102 previously would have required strong materials that can provide sufficient biasing forces, since a large range of force is required to accommodate a corresponding variation of the position of a notional rest position of the spring across the sweep in order to maintain sufficient pressure between the wiper arm 302 and windscreen 102. While mounting the disclosed wiper arm 302 relative to the windscreen in a conventional fashion is of course possible with an appropriate choice of materials, in embodiments where the wiper system is arranged with a spindle axis as described above, the wiper arm 302, in these embodiments, tracks the curvature of the curved windscreen 102 to some extent (as explained above). As a result, the magnitude of force required to bias the wiper arm 302 against the curved windscreen 102 across the sweep is greatly reduced, enabling the use of cheaper materials and/or lighter arrangements.

It will be understood that the wiper arm 302 does not need to be made from a resilient flexible material (i.e. does not need to be a spring arm), and a conventional spring configured in a conventional manner could be used to bias the wiper arm 302 towards the curved windscreen 102 instead.

Figure 9 illustrates a wiper blade 306 for attachment to the wiper attachment 304 of the wiper arm 302. Specifically, the wiper blade 306 can be attached by sliding the wiper blade sleeve 332 of the wiper blade 306 onto the free end 320 of the wiper attachment 304 until the free end 320 engages an internal detent inside the wiper blade sleeve 332.

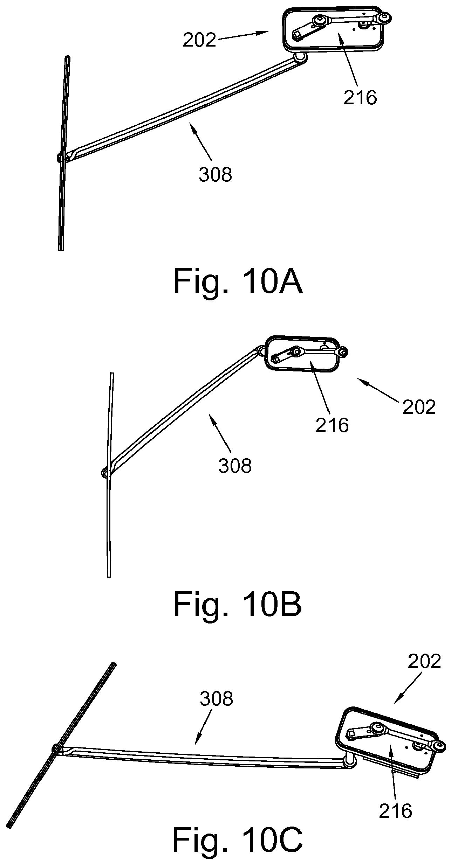

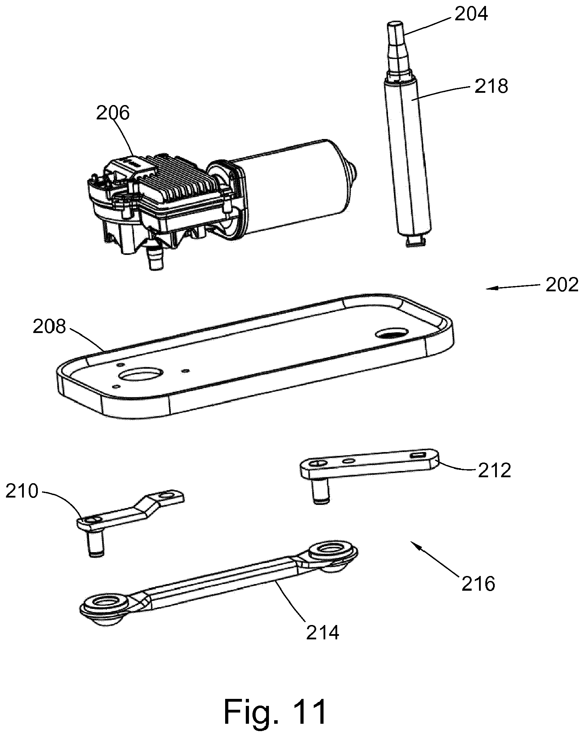

Figures 10A, 10B and 10C illustrate the wiper arm assembly 308 attached to the drive unit 202 and Figure 11 is an exploded view of the drive unit 202. The drive unit comprises a motor 206, base plate 208, first lever 210, second lever 212 and linkage 214. The base plate 208 comprises offset through holes for receiving the levers 210/212. The base plate 208, levers 210/212 and linkage 214 are arranged as a crank 216, configured to convert rotational motion of the motor 206 into reciprocal motion of the spindle 204. Other ways of providing a drive unit 202 that provides reciprocal motion are well known to the skilled person and are used to replace the illustrated arrangement in various embodiments. The drive unit 202 may comprise a sleeve 218 arranged around the spindle 204 and fixedly connected or formed with a casting of the drive unit 202. The parallel link 312 may be secured to the sleeve 218, as described above, in some embodiments. It will be understood that other ways of fixedly disposing the parallel link 312 relative to the drive unit 202 may be employed in accordance with various embodiments.

Figures 1-4 illustrate sweep areas 104 of a wiper arm 302 that is pantographic, however, the presently disclosed wiper system and methods are equally compatible with non-pantographic wiper arms. If the wiper arm 302 is non-pantographic, as the wiper blade 306 rotates about the axis it also rotates relative to the sides of the curved windscreen 102, and the resulting sweep area 104 is V-shaped. Owing to the angle of the axis and the acute angle between the wiper arm 302 and spindle 204 (explained above) the wiper blade 306 will rotate about its longitudinal axis (retaining a better attack angle 330 across the sweep), and also rotate around the curved windscreen 102, tracking the surface of the windscreen 102. This makes such an arrangement particularly suited to a more conical curved windscreen 102.

The wiper arm 302 can be a conventional wiper arm known in the art, such as a wiper arm that is biased towards a windscreen by a spring force generated by a conventional spring. The wiper arm 302 can be a conventional pantographic wiper arm or a conventional non-pantographic wiper arm. Other compatible wiper systems include pivot/radial; sequential sweeping; single blade arm; monoblade; dual windscreen wiper; tandem; panoramic and bimotor.

It will be appreciated that the above description is made by way of example and not limitation of the scope of the appended claims, including any equivalents as included within the scope of the claims. Various modifications are possible and will be readily apparent to the skilled person in the art. Likewise, features of the described embodiments can be combined with any appropriate aspect described above and optional features of any one aspect can be combined with any other appropriate aspect. As described above, the disclosed wiper system, design method and pantographic wiper can be used in the context of vehicles. It will be understood that the disclosed embodiments are applicable to any vehicles that require windscreen (or any other) wipers, be that road vehicles, for example being driven by electric motors or internal combustion engines, naval vehicles such as boats, ships and other vessels and airborne vehicles such as planes, helicopters and the like. The disclosure is further equally applicable to wipers for stationary structures, such as naval or airport control towers.

## Claims

1. A wiper system comprising a curved windscreen, a drive unit and a wiper arm connected to the drive unit by a spindle and having a wiper attachment for attaching a wiper blade to the wiper arm, wherein
the drive unit is configured to reciprocate the wiper arm on a trajectory between two extreme positions by rotation of the spindle about a main axis; and
the main axis is disposed substantially normal to a sweep plane containing a reference point on the wiper arm when the wiper arm is in three respective positions on the trajectory.

2. The wiper system of claim 1, wherein the main axis is disposed with an angle in the range of 60 to 90 degrees away from the sweep plane, preferably 70 to 90 degrees and more preferably 80 to 90 degrees.

3. The wiper arm of claim 1 or claim 2, wherein the reference point corresponds to the wiper attachment.

4. The wiper system of any preceding claim, wherein the wiper arm is part of a pantographic wiper system.

5. The wiper system of claim 4, wherein
the wiper arm has a spindle bracket for attaching the wiper arm to the spindle of the drive unit for reciprocating the wiper arm about the main axis;
the wiper attachment is spaced along the wiper arm from the spindle bracket, wherein the wiper attachment is secured to the wiper arm to rotate about a wiper axis; and
the pantographic wiper system comprises:
an auxiliary arm rotatably connected at one end to the wiper attachment to rotate relative to the wiper attachment about a first auxiliary axis off-set from the wiper axis;
a parallel link for coupling the auxiliary arm at its other end to the drive unit to rotate relative to the parallel link about a second auxiliary axis having a fixed offset from the main axis, thereby rotating the wiper attachment about the wiper axis in a pantographic motion as the wiper arm rotates about the main axis, and
the auxiliary arm is disposed along the wiper arm in an at least partially overlapping relationship.

6. The wiper system of any preceding claim, wherein the wiper arm is a resilient arm made from resiliently flexible material configured to provide a spring force for biasing the wiper attachment towards the curved windscreen.

7. The wiper system of claim 6, wherein all of the force biasing the wiper attachment towards the curved windscreen is provided by the spring force.

8. A method of making a design for a wiper system, the wiper system comprising a curved windscreen, a drive unit and a wiper arm connected to the drive unit by a spindle and having a wiper attachment for attaching a wiper blade to the wiper arm, the method comprising:
defining a sweep area, wherein the drive unit is arranged to reciprocate the wiper arm between two extreme positions to sweep the sweep area with the wiper blade;
defining a reference point on the wiper arm;
defining a sweep plane containing the reference point when the wiper arm is in three different positions of the sweep;
orienting a main axis of rotation of the spindle based on a normal to the sweep plane; and
disposing the wiper arm in relation to the spindle to sweep the sweep area with the wiper blade.

9. The method of claim 8, further comprising orienting the main axis to lie substantially normal to the sweep plane.

10. The method of claim 9, further comprising orienting the main axis along a direction with an angle in the range of 60 to 90 degrees away from the sweep plane, preferably 70 to 90 degrees and more preferably 80 to 90 degrees.

11. The method of any of claims 8 to 10, wherein the main axis lies in a bisecting plane bisecting the curved windscreen.

12. The method of claim 11, wherein an intermediate position corresponding to one of the three different positions lies in the bisecting plane.

13. The method of any of claims 8 to 12, wherein the reference point corresponds to the wiper attachment.

14. The method of any of claims 8 to 13, wherein the three respective positions on the trajectory are the two extreme positions and an intermediate position.

15. A method of making a wiper system comprising:
providing a curved windscreen;
providing a drive unit;
providing a wiper arm connected to the drive unit by a spindle, the wiper arm having a wiper attachment for attaching a wiper blade to the wiper arm; and
arranging the drive unit relative to the curved windscreen in accordance with a design for a wiper system made in accordance with any of claims 8 to 14.

## Amended claims

### Amended claims in accordance with Rule 137(2) EPC.

1. A wiper system comprising a curved windscreen (102), a drive unit (202) and a wiper arm (302) connected to the drive unit (202) by a spindle (204) and having a wiper attachment (304) for attaching a wiper blade (306) to the wiper arm (302), wherein
the drive unit (202) is configured to reciprocate the wiper arm (302) on a trajectory between two extreme positions by rotation of the spindle (204) about a main axis; and
the main axis is disposed substantially normal to a sweep plane containing a reference point on the wiper arm (302) when the wiper arm (302) is in three respective positions on the trajectory.

2. The wiper system of claim 1, wherein the main axis is disposed with an angle in the range of 60 to 90 degrees away from the sweep plane, preferably 70 to 90 degrees and more preferably 80 to 90 degrees.

3. The wiper system of claim 1 or claim 2, wherein the reference point corresponds to the wiper attachment (304).

4. The wiper system of any preceding claim, wherein the wiper arm (302) is part of a pantographic wiper system.

5. The wiper system of claim 4, wherein
the wiper arm (302) has a spindle bracket (322) for attaching the wiper arm (302) to the spindle (204) of the drive unit (202) for reciprocating the wiper arm (302) about the main axis;
the wiper attachment (304) is spaced along the wiper arm (302) from the spindle bracket (322), wherein the wiper attachment (304) is secured to the wiper arm (302) to rotate about a wiper axis; and
the pantographic wiper system comprises:
an auxiliary arm (310) rotatably connected at one end to the wiper attachment (304) to rotate relative to the wiper attachment (304) about a first auxiliary axis off-set from the wiper axis;
a parallel link for coupling the auxiliary arm (310) at its other end to the drive unit (202) to rotate relative to the parallel link about a second auxiliary axis having a fixed offset from the main axis, thereby rotating the wiper attachment (304) about the wiper axis in a pantographic motion as the wiper arm (302) rotates about the main axis, and
the auxiliary arm (310) is disposed along the wiper arm (302) in an at least partially overlapping relationship.

6. The wiper system of any preceding claim, wherein the wiper arm (302) is a resilient arm made from resiliently flexible material configured to provide a spring force for biasing the wiper attachment (304) towards the curved windscreen (102).

7. The wiper system of claim 6, wherein all of the force biasing the wiper attachment (304) towards the curved windscreen (102) is provided by the spring force.

8. A method of making a design for a wiper system, the wiper system comprising a curved windscreen (102), a drive unit (202) and a wiper arm (302) connected to the drive unit (202) by a spindle (204) and having a wiper attachment (304) for attaching a wiper blade (306) to the wiper arm (302), the method comprising:
defining (502) a sweep area, wherein the drive unit (202) is arranged to reciprocate the wiper arm (302) between two extreme positions to sweep the sweep area with the wiper blade (306);
defining (504) a reference point on the wiper arm (302);
defining (506) a sweep plane containing the reference point when the wiper arm (302) is in three different positions of the sweep;
orienting (508) a main axis of rotation of the spindle (204) based on a normal to the sweep plane; and
disposing (510) the wiper arm (302) in relation to the spindle (204) to sweep the sweep area with the wiper blade (306).

9. The method of claim 8, further comprising orienting the main axis to lie substantially normal to the sweep plane.

10. The method of claim 9, further comprising orienting the main axis along a direction with an angle in the range of 60 to 90 degrees away from the sweep plane, preferably 70 to 90 degrees and more preferably 80 to 90 degrees.

11. The method of any of claims 8 to 10, wherein the main axis lies in a bisecting plane bisecting the curved windscreen (102).

12. The method of claim 11, wherein an intermediate position corresponding to one of the three different positions lies in the bisecting plane.

13. The method of any of claims 8 to 12, wherein the reference point corresponds to the wiper attachment (304).

14. The method of any of claims 8 to 13, wherein the three respective positions on the trajectory are the two extreme positions and an intermediate position.

15. A method of making a wiper system comprising:
providing a curved windscreen (102);
providing a drive unit (202);
providing a wiper arm (302) connected to the drive unit (202) by a spindle (204), the wiper arm (302) having a wiper attachment (304) for attaching a wiper blade (306) to the wiper arm (302); and
arranging the drive unit (202) relative to the curved windscreen (102) in accordance with a design for a wiper system made in accordance with any of claims 8 to 14.
